# EUROPEAN PATENT SPECIFICATION

(11) **EP 0 666 159 B1**
(45) Date of publication and mention of the grant of the patent: **15.09.1999**
(21) Application number: 95105605.0
(22) Date of filing: 30.05.1990
(51) Int. Cl.: B29C 45/00, B29C 45/16

(54) **Injection-molding clamp-reduction**
Verminderung der Schliesskraft beim Spritzgiessformen
Réduction de la force de serrage dans le moulage par injection

(30) Priority: 05.06.1989 US 361275
(43) Date of publication of application: 09.08.1995
(62) Divisional of application: 90908897.3
(73) Proprietor: SORENSEN, Jens Ole, California 92067 (US)
(72) Inventor: SORENSEN, Jens Ole, California 92067 (US)
(74) Representative: Wilson, Nicholas Martin

(56) References cited:
- EP-A- 0 057 547
- EP-A- 0 100 603
- WO-A-88/05376
- DE-A- 1 816 466
- DE-A- 2 046 958
- GB-A- 2 138 736
- US-A- 4 140 828
- US-A- 4 867 672
- PATENT ABSTRACTS OF JAPAN vol. 009, no. 209 (M-407) [1932] , 27 August 1985 & JP 60 071217 A (TOUYOU SEIKAN KK), 23 April 1985,

## Description

The present invention generally pertains to injection molding of plastic products and is particularly directed to improvement in methods of reducing the clamping force requirements of a plastic product while being injection molded.

Prior art methods which reduce the clamping force requirements of a plastic product while being injection molded are described in U.S. Patents Nos. 4,381,275, 4,508,676 and 4,789,326 all to Sorensen.

### SUMMARY OF THE INVENTION

The present invention relates to a method of injection molding a thin-walled plastic product by utilizing a mold having a first section and a second section defining a mold cavity therebetween, comprising the steps of:
(a) providing a first injection of a plastic material into the mold cavity; and,
(b) cooling the plastic material of the first injection in the mold cavity;
   characterized by:
   step (b) comprising the step of cooling one portion of the plastic material of the first injection so that it is at least partially solidified and so that another portion of the plastic material of the first injection remains fluid;
(c) providing subsequent to the first injection of plastic material, a second injection of a plastic material into the mold cavity without intermission from the first injection of plastic material when the cooled plastic material of the first injection is sufficiently solidified, the plastic material of the second injection displacing some of the fluid plastic material of the first injection to thereby provide at least one flow path to continue filling the mold cavity and so that some of the at least partially solidified plastic material of the first injection impedes transmission of injection pressure caused by the second injection of plastic material to thereby during the second injection of plastic material reduce the clamping force required to overcome forces that tend to separate the first and second mold sections as a result of injection pressure; and,
(d) cooling the injected plastic material in the mold cavity to thereby solidify the molded product.

In the present invention, a separative force exerted against mold sections is reduced when injection molding a hollow plastic product that is injected by using a first mold section and a second mold section that are combined to define a mold cavity for the product therebetween, and which mold sections, when so combined, are separated by a parting line, wherein the mold cavity includes a gate and flow channels extending through a region of the cavity, wherein plastic material injected into the mold cavity exerts said separative force against the mold sections while said injected plastic remains in a fluid state, the method comprising the step of injecting plastic material continuously into the mold cavity from the gate until the mold cavity is filled with said injected plastic material, with said injection being under such conditions of injection pressure, injected plastic material temperature, mold cavity wall temperature, flow channel length, distance between flow channels, flow channel thickness and wall thickness in a thin-cavity region between flow channels that initially injected plastic material solidifies in the thin-cavity regions prior to the mold cavity being filled with the injected plastic material to thereby reduce said separative force.

I have ascertained that under the right combination of conditions of injection pressure, injected plastic material temperature and mold cavity wall temperature, the separative force can be reduced by this method when the quotient of a ratio of flow channel length to distance between flow channels divided by the square of a ratio of flow channel thickness to wall thickness in a thin-cavity region between flow channels is less than two. These ratios are applicable for that portion of the mold cavity in which separative force reduction is desired.

This method may be executed without the help of retractable portions of the mold sections, multiple gates, temporary cavity-section-to-free-end-of-core-section contact, throttles, valves or reduced throats, and without the use of complementary shaped formations, but that is not to imply that the present invention cannot be executed in combination with one or more or such features.

The method of the present invention is particularly well suited for injection molding of products with laminated walls. In such cases, the mold cavity may contain a first injected plastic product which was injected in a previous injection cycle, so that the injection of first and second plastics according to the invention provides a plastic material coating of the first injected plastic product.

Additional features of the present invention are described in relation to the description of the preferred embodiments.

### BRIEF DESCRIPTION OF THE DRAWING

Figure 1 is a sectional view of a mold used to execute one preferred embodiment of the method of the present invention.
Figure 2 is a sectional view of the mold shown in Figure 1 taken along lines 2-2.
Figure 3 is a sectional view of the mold shown in Figure 1 taken along lines 3-3.
   The sectional view of Figure 1 is taken along lines A-A of Figure 2 and along lines B-B of Figure 3.
Figure 4 is a sectional view of a mold used to execute a preferred embodiment of the method of the present invention for molding a hollow plastic product with laminated walls.
Figure 5 is a sectional view of the mold shown in Figure 4 taken along lines 5-5.
Figure 6 is a sectional view of the mold shown in Figure 4 taken along lines 6-6.

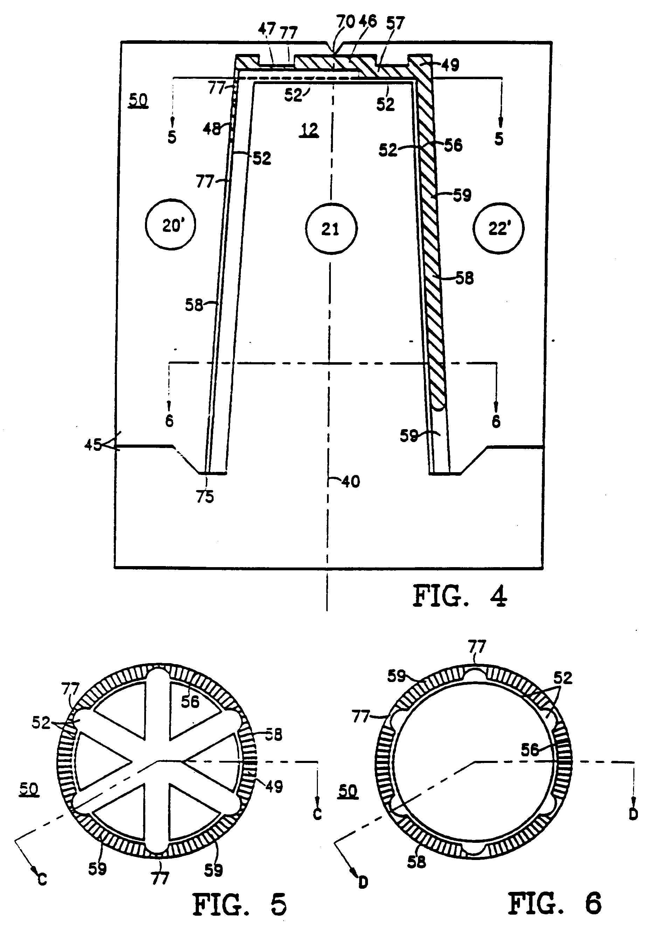

The sectional view of Figure 4 is taken along lines C-C of Figure 5 and along lines D-D of Figure 6.

The product wall thickness shown in the Drawing are increased in order to better show the invention. The actual wall thicknesses are normally much smaller, and depend on the type of plastic material, the temperature of the plastic material, the mold temperature, the thermal conductivity of the mold wall material, the flow distances, the injection pressure, and other molding parameters.

### DESCRIPTION OF THE PREFERRED EMBODIMENTS

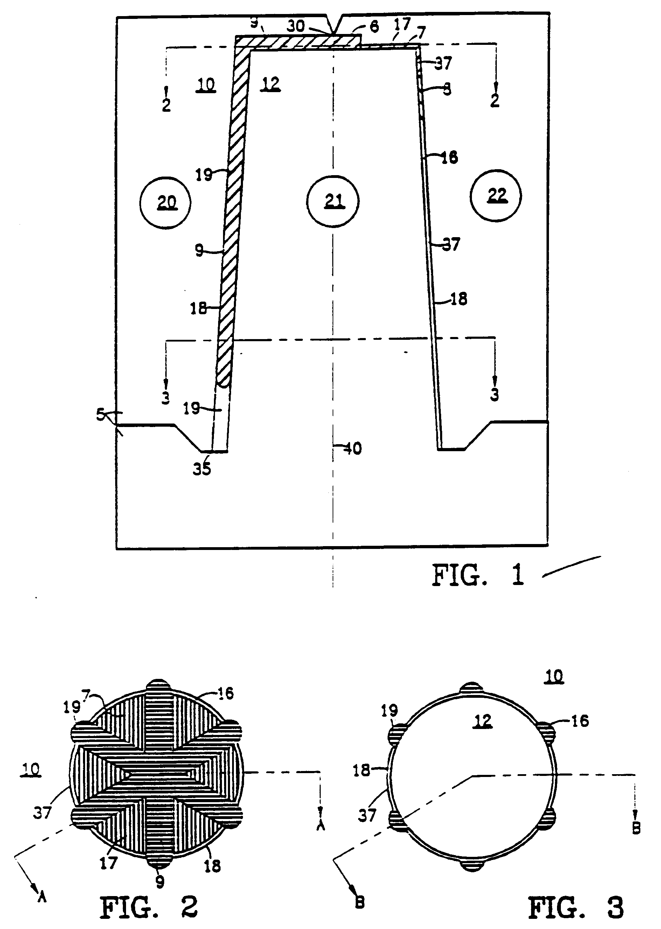

Referring to Figures 1, 2 and 3, the preferred embodiment of the invention utilizes a mold 5 with a cavity mold section 10 and a core mold section 12, shown in its assembled arrangement. The mold 5 defines a mold cavity 16 for forming a plastic product having perimetric side walls, not shown in its fully molded outline. The mold cavity 16 includes a base region 17, a side-wall-defining region 18 and flow channels 19 extending from the base region 17 through the side-wall-defining region 18.

Cooling means 20, 21 and 22 are used to cool both the first and second injected plastic material. Molten plastic material may be injected into the mold cavity 16 via a gate 30 located in the centre of the base region 17 of the mold cavity 16. The cavity section 10 and the core section 12 are separated by a parting line 35. The mold cavity 16 may be opened along axis 40 for ejection of a molded product.

The methods of the preferred embodiment are executed as follows. A first plastic material 6,7,8,9 is injected into the mold cavity 16 so that only a part of the mold cavity 16 is filled, a second plastic material is injected without intermission. The first plastic material has the same chemical composition as the second plastic material.

A portion of the first plastic material 7 cools in the thin cavity region 37 between flow channels 19 before the second plastic material is injected so that it is at least partially solidified and so that another portion of the first plastic material 6,8,9 remains fluid.

The at least partially solidified portion of the first plastic cools very fast before a second plastic material is injected, because the wall thickness of the thin-cavity region 37 is very thin. Another portion of the first plastic material 6,8,9 remains fluid because the wall thickness of the flow channels 19 is relatively thick.

Subsequent to injecting the first plastic material 6,7,8,9 a second plastic material is injected into the mold cavity via the gate 30. The second plastic material displaces some of the fluid first plastic material in the flow channels 19, and thereby induces a number of flow paths 9 for the second plastic to fill the mold cavity 16.

Some of the at least partially solidified first plastic material 7 in the thin cavity regions 37 is sufficiently solidified to stabilize and support the core section 12 in relation to the cavity section 10 by impeding movement caused by injecting the second plastic material.

Some of the at least partially solidified first plastic material 7 in the thin cavity regions 37 is also sufficiently solidified to impede transmission of injection pressure in the first plastic material 7, caused by injecting the second plastic material which effect separative forces of the core mold section 12 in relation to the cavity mold section 10. The injected plastic material is then cooled to completely solidify the product.

The first plastic material is injected so that it does not completely cover the parting line 35 and fill the mold cavity 16, and the second plastic material is injected so that it completely covers the parting line and fills the mold cavity 16.

An example is as follows, the thin product wall thickness in the thin cavity regions 37 being 0.15mm, the thick product wall thickness of the flow channels 19 being 0.6mm, the plastic material being polypropylene or polystyrene at a temperature of 300°C, the mold temperature being 10°C, the thermal conductivity of the mold being that of steel, the flow distance through the side-wall defining region 18 of the flow channels 19 being about 150mm, the distance between flow channels 19 being about 5mm, and the injection pressure being 2000 Bar.

Referring to Figures 4, 5 and 6, the preferred embodiment of the invention used when molding a hollow plastic product with laminated walls utilizes a mold 45 with a cavity mold section 50 and a core mold section 12, shown in its assembled arrangement. The mold 45 defines a mold cavity 56 for forming a plastic product having laminated perimetric side walls, not shown in its fully molded outline. An early layer 52 of the laminated plastic product is encased on the core section 12 in the mold cavity 56. The early layer 52 was formed in accordance with the embodiment of the invention described with reference to Figures 1, 2 and 3.

The mold cavity 56 includes a base region 57, a side-wall-defining region 58 and flow channels 59 extending from the base region 57 through the side-wall-defining region 58.

Cooling means 20', 21 and 22' are used to cool both the first and second injected plastic material. Molten plastic material may be injected into the mold cavity 56 via a gate 70 located in the centre of the base region 57 of the mold cavity 56. The cavity section 50 and the core section 12 are separated by a parting line 75. The mold cavity 56 may be opened along axis 40 for ejection of a molded product.

The methods of this preferred embodiment are executed as follows. A first plastic material 46,47,48,49 is injected into the mold cavity 56 so that only a part of the mold cavity 56 is filled, a second plastic material is injected without intermission. The first plastic material has the same chemical composition as the second plastic material. Only a region of the early layer 52 is coated with the first plastic material 46,47,48,49, as shown in Figure 4.

A portion of the first plastic material 47 cools in the thin cavity region 77 between flow channels 59 before the second plastic material is injected so that it is at least partially solidified and so that another portion of the first plastic material 46,48,49 remains fluid.

The at least partially solidified portion of the first plastic cools very fast before a second plastic material is injected, because the wall thickness of the thin-cavity region 77 is very thin. Another portion of the first plastic material 46,48,49 remains fluid because the wall thickness of the flow channels 59 is relatively thick.

Subsequent to injecting the first plastic material 46,47,48,49 a second plastic material is injected into the mold cavity via the gate 70. The second plastic material displaces some of the fluid first plastic material in the flow channels 59, and thereby induces a number of flow paths 49 for the second plastic to fill the mold cavity 56, and further coat the early layer 52.

Some of the at least partially solidified first plastic material 47 in the thin cavity regions 77 is sufficiently solidified to combine with a sufficiently solidified portion of the early layer 52 to stabilize and support the core section 12 in relation to the cavity section 50 by impeding movement caused by injecting the second plastic material.

Some of the at least partially solidified first plastic material 47 in the thin cavity regions 77 is also sufficiently solidified to combine with a sufficiently solidified portion of the early layer 52 to impede transmission of injection pressure in the first plastic material 47, caused by injecting the second plastic material which effect separative forces of the core mold section 12 in relation to the cavity mold section 50. The injected plastic material is then cooled to completely solidify the product.

The first plastic material is injected so that it does not completely cover the parting line 75 and fill the mold cavity 56, and the second plastic material is injected so that it completely covers the parting line and fills the mold cavity 56.

In the particular preferred embodiments of the invention described herein, contrary to certain prior art methods of core steering, no retractable portion of the core section and/or the cavity section is protracted to contact the other mold section to stabilize the core section in relation to the cavity section during the continuous injection of the plastic material; the configuration of the mold cavity as defined by the mold sections is maintained without change during the continuous injection of plastic material; the mold cavity is formed by combining mold sections that define a mold cavity that does not include any throttle between the base region and the side wall defining region; and no use is made of multiple gates, in order to create one or more flow path for the second plastic material to fill the mold cavity.

In other preferred embodiments of the present invention the first plastic material is injected into the mold cavity via more than one gate and the second plastic material is injected into the mold cavity via the same gates.

When the method of the invention is used only for reducing the required clamping force for the product and not for steering the core section, the method of the invention may be executed in molds which do not have a core section and a cavity section.

## Claims

1. A method of injection molding a thin-walled plastic product by utilizing a mold having a first section (12) and a second section (10,50) defining a mold cavity (16,46) therebetween, comprising the steps of:
(a) providing a first injection of a plastic material (6,7,8,9,46,47,48,49) into the mold cavity; and,
(b) cooling the plastic material of the first injection in the mold cavity; characterized by: step (b) comprising the step of cooling one portion of the plastic material (7,47) of the first injection so that it is at least partially solidified and so that another portion of the plastic material (6,8,9,46,48,49) of the first injection remains fluid;
(c) providing subsequent to the first injection of plastic material, a second injection of a plastic material into the mold cavity without intermission from the first injection of plastic material when the cooled plastic material of the first injection is sufficiently solidified, the plastic material of the second injection displacing some of the fluid plastic material (6,8,9,46,49,49) of the first injection to thereby provide at least one flow path to continue filling the mold cavity (16,56) and so that some of the at least partially solidified plastic material (7,47) of the first injection impedes transmission of injection pressure caused by the second injection of plastic material to thereby during the second injection of plastic material reduce the clamping force required to overcome forces that tend to separate the first (12) and second (10,50) mold sections as a result of injection pressure; and,
(d) cooling the injected plastic material in the mold cavity to thereby solidify the molded product.

2. A method according to claim 1, wherein said mold cavity (16,46) includes a base region and flow channels extending from the base region through a region of the cavity that defines the side walls of the product, the method being further characterized by the step of:
(e) forming said mold cavity in which within a portion of the mold cavity, the quotient of a ratio of flow channel length to distance between flow channels divided by the square of a ratio of flow channel thickness to wall thickness in a thin-cavity region between flow channels is less than two.

3. A method according to claim 1 or 2, wherein the first mold section (12) and the second mold section (10,50) are separated by a parting line (35,75), the method characterized by step (a) comprising the step of:
(f) providing the first injection of plastic material so that the plastic material of the first injection (6,7,8,9,46,47,48,49) does not completely cover the parting line; and, step (c) comprising the step of:
(g) providing the second injection of plastic material so that the plastic material of the second injection fills the mold cavity (16,56) to thereby completely cover the parting line.

4. A method according to claim 1 or 2, characterized by step (b) comprising the steps of:
(h) cooling said one portion of the plastic material (7,47) of the first injection so that it is at least partially solidified by molding said portion in a relatively thin wall thickness (37,77); and,
(i) cooling said other portion of the plastic material (6,8,9,46,48,49) of the first injection so that said other portion of the plastic material of the first injection remains fluid by molding said other portion in a relatively thick wall thickness (19,59).

5. A method according to claim 1 or 2, characterized in that the plastic material (6,7,8,9,46,47,48,49) of the first injection has the same chemical composition as the plastic material of the second injection.

6. A method according to claim 1 or 2, characterized in that the plastic material (6,7,8,9,46,47,48,49) of the first injection is injected into the mold cavity (16,56) via at least one gate (30,70), and wherein the plastic material of the second injection is injected into the mold cavity via the same at least one gate.

7. A method according to claim 1 or 2, characterized in that a single gate is used to create at least one flow path for the plastic material of the second injection to continue filling the mold cavity (16,56).

8. A method according to claim 1 or 2, characterized in that the injection molded hollow plastic product has laminated walls, and the mold cavity (56) contains a previously injected plastic product (52) when plastic material of the first and second injections is injected so that one said wall includes the previously injected plastic product.

## Patentansprüche

1. Verfahren zum Spritzgießen eines dünnwandigen Kunststofferzeugnisses unter Verwendung einer Form, die einen ersten Formteil (12) und einen zweiten Formteil (10, 50) hat, die zwischen sich einen Formhohlraum (16, 46) bilden, wobei das Verfahren die Schritte aufweist,
a) Durchführen einer ersten Einspritzung eines Kunststoffs (6, 7, 8, 9, 46, 47, 48, 49) in den Formhohlraum und
b) Abkühlen des Kunststoffs der ersten Einspritzung in dem Formhohlraum,
dadurch gekennzeichnet, daß
- der Schritt b) den Schritt aufweist, einen Teil des Kunststoffs (7, 47) der ersten Einspritzung abzukühlen, so daß er wenigstens teilweise verfestigt ist und ein weiterer Teil des Kunststoffs (6, 8, 9, 46, 48, 49) der ersten Einspritzung fluid bleibt,
- c) folgend auf die erste Einspritzung von Kunststoff unmittelbar daran anschließend eine zweite Einspritzung von Kunststoff in den Formhohlraum durchgeführt wird, wenn der abgekühlte Kunststoff der ersten Einspritzung ausreichend verfestigt ist, wobei der Kunststoff der zweiten Einspritzung etwas fluiden Kunststoff (6, 8, 9, 46, 48, 49) der ersten Einspritzung verdrängt, um dadurch wenigstens einen Strömungsweg zur Fortsetzung des Füllens des Formhohlraums (16, 56) bereitzustellen, so daß etwas von dem wenigstens teilweise verfestigten Kunststoff (7, 47) der ersten Einspritzung eine Übertragung des Einspritzdrucks verhindert, der von der zweiten Einspritzung von Kunststoff verursacht wird, um dadurch während der zweiten Einspritzung von Kunststoff die Klemmkraft zu verringern, die erforderlich ist, um Kräfte zu überwinden, die den ersten (12) und den zweiten (10, 50) Formteil als Folge des Einspritzdrucks trennen möchten, und
- d) der eingespritzte Kunststoff in dem Formhohlraum abgekühlt wird, um dadurch das ausgeformte Erzeugnis zu verfestigen.

2. Verfahren nach Anspruch 1, bei welchem der Formhohlraum (16, 46) einen Basisbereich und Strömungskanäle hat, die sich von dem Basisbereich durch einen Bereich des Hohlraums erstrecken, der die Seitenwände des Erzeugnisses bildet, wobei das Verfahren weiterhin durch den Schritt gekennzeichnet ist,
e) den Formhohlraum zu bilden, in welchem innerhalb eines Teils des Formhohlraums der Quotient eines Verhältnisses aus Strömungskanallänge zu dem Abstand zwischen den Strömungskanälen geteilt durch das Quadrat eines Verhältnisses der Strömungskanaldicke zur Wanddicke in einem Dünnhohlraumsbereich zwischen den Strömungskanälen weniger als zwei beträgt.

3. Verfahren nach Anspruch 1 oder 2, bei welchem der erste Formteil (12) und der zweite Formteil (10, 50) durch eine Trennlinie (35, 75) getrennt sind, wobei das Verfahren dadurch gekennzeichnet ist,
- daß der Schritt a) den Schritt f) aufweist, die erste Einspritzung von Kunststoff so durchzuführen, daß der Kunststoff der ersten Einspritzung (6, 7, 8, 9, 46, 47, 48, 49) die Trennlinie nicht vollständig abdeckt und
- daß der Schritt c) den Schritt g) aufweist, die zweite Einspritzung von Kunststoff so durchzuführen, daß der Kunststoff der zweiten Einspritzung den Formhohlraum (16, 56) füllt, um dadurch die Trennlinie vollständig abzudecken.

4. Verfahren nach Anspruch 1 oder 2, dadurch gekennzeichnet, daß der Schritt b) die Schritte aufweist,
h) den einen Teil des Kunststoffs (7, 47) der ersten Einspritzung abzukühlen, so daß er wenigstens teilweise verfestigt ist, indem der Abschnitt mit einer relativ dünnen Wanddicke (37, 77) ausgeformt wird,
i) den anderen Teil des Kunststoffs (6, 8, 9, 46, 48, 49) der ersten Einspritzung abzukühlen, so daß der andere Abschnitt des Kunststoffs der ersten Einspritzung fluid bleibt, indem der andere Teil mit einer relativ dicken Wanddicke (19, 59) ausgeformt wird.

5. Verfahren nach Anspruch 1 oder 2, dadurch gekennzeichnet, daß der Kunststoff (6, 7, 8, 9, 46, 47, 48, 49) der ersten Einspritzung die gleiche chemische Zusammensetzung wie der Kunststoff der zweiten Einspritzung hat.

6. Verfahren nach Anspruch 1 oder 2, dadurch gekennzeichnet, daß der Kunststoff (6, 7, 8, 9, 46, 47, 48, 49) der ersten Einspritzung in den Formhohlraum (16, 56) über wenigstens einen Anguß (30, 70) eingespritzt wird, wobei der Kunststoff der zweiten Einspritzung in den Formhohlraum über den gleichen wenigstens einen Anguß eingespritzt wird.

7. Verfahren nach Anspruch 1 oder 2, dadurch gekennzeichnet, daß ein einziger Anguß verwendet wird, um wenigstens einen Strömungsweg für den Kunststoff der zweiten Einspritzung zur Fortsetzung der Füllung des Formhohlraums (16, 56) zu schaffen.

8. Verfahren nach Anspruch 1 oder 2, dadurch gekennzeichnet, daß das spritzgegossene hohle Kunststofferzeugnis laminierte Wände hat und daß der Formhohlraum (56) ein vorher gespritztes Kunststofferzeugnis (52) enthält, wenn der Kunststoff der ersten und zweiten Einspritzung eingespritzt wird, so daß die eine Wand das vorher eingespritzte Kunststofferzeugnis einschließt.

## Revendications

1. Procédé de moulage par injection d'un article en matière plastique à parois minces à l'aide d'un moule ayant une première section (12) et une deuxième section (10, 50) définissant entre elles une cavité (16, 46) de moule, comprenant les étapes consistant à :
(a) effectuer une première injection de matière plastique (6, 7, 8, 9, 46, 47, 48, 49) dans la cavité du moule ; et
(b) refroidir la matière plastique de la première injection dans la cavité du moule ;
caractérisé en ce que :
l'étape (b) comprend l'étape consistant à refroidir une première partie de la matière plastique (7, 47) de la première injection de façon qu'elle soit au moins partiellement solidifiée et de façon qu'une autre partie de la matière plastique (6, 8, 9, 46, 48, 49) de la première injection reste fluide ;
(c) effectuer, à la suite de la première injection de matière plastique, une seconde injection de matière plastique dans la cavité du moule sans interruption par rapport à la première injection de matière plastique lorsque la matière plastique refroidie de la première injection est suffisamment solidifiée, la matière plastique de la seconde injection déplaçant une partie de la matière plastique fluide (6, 8, 9, 46, 48, 49) de la première injection pour réaliser ainsi au moins un trajet d'écoulement pour continuer à remplir la cavité (16, 56) du moule et de façon qu'une partie de la matière plastique (7, 47) au moins partiellement solidifiée de la première injection empêche la transmission de pression d'injection provoquée par la deuxième injection de matière plastique afin de réduire ainsi, pendant la seconde injection de matière plastique, la force de serrage nécessaire pour vaincre les forces qui ont tendance à séparer les première (12) et seconde (10, 50) sections de moule du fait de la pression d'injection ; et
(d) refroidir la matière plastique injectée dans la cavité du moule pour ainsi solidifier l'article moulé.

2. Procédé selon la revendication 1, dans lequel ladite cavité (16, 46) du moule comporte une région de base et des canaux d'écoulement s'étendant depuis la région de base à travers une région de la cavité qui définit les parois latérales de l'article, le procédé étant en outre caractérisé par l'étape consistant à :
(e) former ladite cavité de moule dans laquelle, dans une partie de la cavité de moule, le quotient d'un rapport de longueur des canaux d'écoulement à la distance entre les canaux d'écoulement divisé par le carré d'un rapport de l'épaisseur des canaux d'écoulement à l'épaisseur de la paroi dans une région mince de cavité entre les canaux d'écoulement est inférieur à deux.

3. Procédé selon la revendication 1 ou 2, dans laquelle la première section (12) de moule et la deuxième section (10, 50) de moule sont séparées par une ligne de séparation (35, 75), le procédé étant caractérisé par
une étape (a) comprenant l'étape consistant à :
(f) effectuer la première injection de matière plastique de façon que la matière plastique de la première injection (6, 7, 8, 9, 46, 47, 48, 49) ne couvre pas entièrement la ligne de séparation ; et
l'étape (c) comprenant l'étape consistant à :
(g) effectuer la seconde injection de matière plastique da façon que la matière plastique de la seconde injection remplisse la cavité (16, 56) du moule pour ainsi couvrir entièrement la ligne de séparation.

4. Procédé selon la revendication 1 ou 2, caractérisé par l'étape (b) comprenant les étapes consistant à :
(h) refroidir ladite première partie de la matière plastique (7, 47) de la première injection de façon qu'elle soit au moins partiellement solidifiée, en moulant ladite partie sur une épaisseur de paroi relativement faible (37, 77) : et
(i) refroidir ladite autre partie de la matière plastique (6, 8, 9, 46, 48, 49) de la première injection de façon que ladite autre partie de la matière plastique de la première injection reste fluide en moulant ladite autre partie sur une épaisseur de paroi relativement grande (19, 59).

5. Procédé selon la revendication 1 ou 2, caractérisé en ce que la matière plastique (6, 7, 8, 9, 46, 47, 48, 49) de la première injection a la même composition chimique que la matière plastique de la seconde injection.

6. Procédé selon la revendication 1 ou 2, caractérisé en ce que la matière plastique (6, 7, 8, 9, 46, 47, 48, 49) de la première injection est injectée dans la cavité (16, 56) du moule par l'intermédiaire d'au moins un trou de coulée (30, 70), et dans lequel la matière plastique de la seconde injection est injectée dans la cavité du moule par l'intermédiaire du même trou de coulée au moins unique.

7. Procédé selon la revendication 1 ou 2, caractérisé en ce qu'un seul trou de coulée est utilisé pour créer au moins un trajet d'écoulement pour la matière plastique de la deuxième injection afin de continuer à remplir la cavité (16, 56) du moule.

8. Procédé selon la revendication 1 ou 2, caractérisé en ce que l'article creux en matière plastique moulé par injection comporte des parois stratifiées, et la cavité (56) du moule contient un article (52) en matière plastique précédemment injectée lorsque de la matière plastique des première et deuxième injections est injectée afin qu'une desdites parois comporte l'article précédemment injecté en matière plastique.
